# EUROPEAN PATENT SPECIFICATION

(11) **EP 2 644 304 B1**
(45) Date of publication and mention of the grant of the patent: **20.11.2019**
(21) Application number: 13158541.6
(22) Date of filing: 11.03.2013
(51) Int. Cl.: B23D 49/00, B23D 51/16

(54) **A portable power-driven saw**
Handbetätigte Motorsäge
Scie à moteur portative

(30) Priority: 26.03.2012 GB 201205272
(43) Date of publication of application: 02.10.2013
(73) Proprietor: Black & Decker Inc., Newark, Delaware 19711 (US)
(72) Inventor: Armstrong, Jonathan, Crook, Durham DL15 0SX (GB)
(74) Representative: SBD IPAdmin

(56) References cited:
- CN-A- 102 350 545
- DE-A1- 3 638 376
- US-A- 4 031 622
- US-A- 5 031 324

## Description

The present invention relates to a portable power-driven saw of the type using reciprocating rectilinear motion to perform cutting operations.

A portable power-driven saw is disclosed by U.S. patent publication No. 4,031,622. The power-driven saw comprises a blade support; a power means with a drive shaft rotatable by the power means; a saw blade slideably supported by the blade support for reciprocating rectilinear motion; and a drive mechanism for generating reciprocating rectilinear motion of the saw blade in response to rotation of the drive shaft. The drive mechanism operates like a crank shaft. A link member connects a rotating crank pin to the saw blade. The link member has a pair of arms defining an aperture through which the drive shaft extends. In use, vibrations may propagate from the reciprocating saw blade to the power means and to the power-driven saw's housing when held by a user. These vibrations may be tiresome to the user over time. The greater the amplitude of the vibrations the less time a portable power-driven saw may be held by the user. An embodiment of the portable power-driven saw of US 4,031,622 has a flexible drive chain to transmit rotation of the drive gear to the driven gear. According to US 4,031,622, the flexible drive chain minimises transmission of vibrations from the saw blade to the power means.

Another portable power-driven saw is disclosed by U.S. patent publication No. 5,031,324. The power-driven saw comprises a blade support; a power means with a drive shaft rotatable by the power means; a pair of saw blades slideably supported by the blade support for rectilinear motion; and a drive mechanism for generating counter-reciprocating rectilinear motion of the saw blades in response to rotation of the drive shaft. The drive mechanism operates like a scotch yoke. A pair of sliding yokes, each shaped like a cross with a longitudinal slot traversed by a lateral slot, couples the rotating crank pins to a respective saw blade. The drive shaft extends through the longitudinal slots. Each crank pin is mounted in a sliding piece which slides in a respective lateral slot. According to US 5,031,324, the length of a sliding piece corresponds to at least twice the width of a longitudinal slot plus the diameter of an associated crank pin. This is to ensure that the sliding pieces are reliably guided and do not tilt in the longitudinal direction in the transition region where the lateral and longitudinal slots intersect. Otherwise, the crank pins would not reliably traverse the transition region of the slots alone. The sliding pieces introduce additional components. The sliding pieces and lateral slots are made to tight tolerances to ensure smooth operation. This may increase manufacturing cost of the power-driven saw. The sliding pieces and lateral slots are subject to rapid wear by sliding friction and high contact pressures. This may reduce the service life of the power-driven saw, especially if the power-driven saw is used in a dusty environment as is commonly the case with saws.

DE 3 638 376 discloses a reciprocating saw as per the preamble of claim 1.

The present invention provides a portable power-driven saw in accordance with Claim 1. The present invention provides a compact and manoeuvrable design of portable power-driven saw by locating the bulk of the power means, and its drive shaft, in a central region of the saw's housing whilst its counter-reciprocating rectilinear cutting motion may provide approximately double the output of the power-driven saw disclosed by US 4,031,622 with only a marginal increase in the overall height of the drive mechanism. Also, the drive mechanism of the present invention does not feature tight tolerances between moving parts such as the sliding pieces and lateral slots of US 5,031,324. This may reduce wear caused by sliding friction with high contact pressures which may prolong the service life of the portable power-driven saw of the present invention. Vibration caused by each of the counter-reciprocating saw blades of the present invention tends to counter-act each other. This reduces vibration without dedicated anti-vibration features in the drive mechanism such as the flexible drive chain of US 4,031,622. This may simplify the design and assembly of the portable power-driven saw according to the present invention.

Having two arms adds rigidity to the connecting-rods. Forces acting along the connecting-rod are divided and balanced substantially equally between the arms, thereby reducing the risk of fatigue.

The longer of the arms of each connecting-rod arches around the drive shaft and traverses the central plane to where it connects to the drive coupling of a respective saw blade. The shorter of the arms arches around the drive shaft but it does not traverse the central plane. The connecting-rods are opposite and asymmetric about the central plane. In use, each shorter arm's lateral sweep is closer to the central plane than it would be if the arms of each connecting-rod were a mirror image of each other. This reduces the width of the drive mechanism which may diminish the lateral profile of the power-driven saw's housing.

The shafts provide an interface between the connecting-rods inside the housing and the saw blades outside the housings. The drive mechanism and power means may be a self-contained unit shielded within the housing from dust and debris which may impair functioning of the drive mechanism over time.

The counter-reciprocating rectilinear motion delivered by the drive mechanism may provoke vigorous movement, especially when the saw blades are cutting. The bearing provides additional structural support to the drive mechanism.

Preferably, the drive shaft has at least one drive gear rotatable with the drive shaft, wherein the crank assembly comprises a first driven gear and a second driven gear, wherein each driven gear independently rotatable about the crank axis on a respective driven gear axle supported by a respective bearing, wherein each driven gear has a respective one of the crank pins connected to a first non-toothed side of the driven gear and a respective driven gear axle connected to a second opposite non-toothed side of the driven gear, wherein the at least one drive gear meshes with the first and second driven gears to transmit rotation of the drive shaft to the crank pins. The nature of the power-driven saw's operation is such that there are sharp counter-reciprocating forces acting along the saw blades which are transmitted to the drive mechanism. Independent driven gears, each having its own crank pin and driven gear axle, divides the crank axis and diminishes counter-rotational torque which may otherwise be transmitted along, and cause fatigue in, an integral crank axis such as a crank shaft. Also, the separate driven gears facilitate manufacture and repair of the power-driven saw by constructing the drive mechanism from readily assembled parts.

Preferably, the first non-toothed side of each driven gear face each other. As a result, the crank pins are sandwiched between the driven gears. This facilitates construction of the drive mechanism by making it easier to position the crank pins relative each other because they can be observed at the same time.

Preferably, the central plane is substantially equidistant between the outermost edges of the arms of each connecting-rod when the crank pins occupy the central plane. The lateral sweep of each connecting-rod is substantially equal on both sides of the central plane. This minimises the space occupied by the drive mechanism within the housing of the power-driven saw.

Preferably, the arms of the connecting-rods are arched in a smooth curve about the drive shaft. The smooth curve of the arms may be any curved profile without notches or corners to act as stress concentration points.

A drive coupling may be any feature capable of coupling one end of a saw blade to a respective connecting-rod. A drive coupling may be integral with the saw blade, for example. Preferably, the second end of each shaft comprises a blade clamp detachably connected to a respective saw blade. The blade clamp facilitates renewal of the saw blades when damaged or worn.

A specific embodiment of the present invention will now be described with reference to the accompanying drawings of which:
Figure 1 shows a side elevation view of a power-driven saw with counter-reciprocating rectilinear cutting motion;
Figure 2 shows a side elevation view of a pair of saw blades each with a convex array of cutting teeth, a blade support and a drive mechanism of the power-driven saw of Figure 1;
Figure 3 shows a perspective view of the electric motor and the drive mechanism of Figure 2;
Figure 4 shows a side elevation view of the electric motor and the drive mechanism of Figure 2;
Figure 5 shows a cross-section V-V of the drive mechanism of Figure 4;
Figure 6 shows a cross-section VI-VI of the drive mechanism of Figure 4;
Figure 7 shows a cross-section VII-VII of the one of the saw blades and the blade support of Figure 1;
Figure 8 shows a cross-section VIII-VIII of one saw blade and one side of the blade support of Figure 7; and
Figure 9 shows a side elevation view of a saw blade with a concave array of cutting teeth.

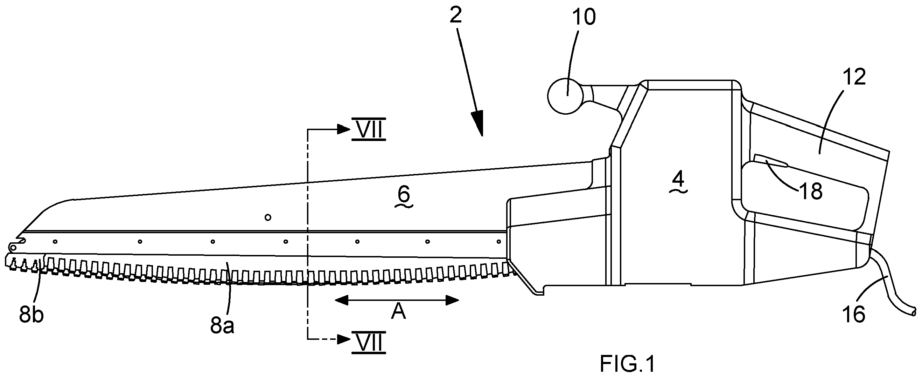

Referring to Figure 1, a power-driven saw 2 comprises a housing 4, an elongate saw blade support 6 and a pair of saw blades 8a, 8b for counter-reciprocating rectilinear cutting motion in the direction of double-headed arrow A. The housing comprises a front handle 10 and a rear handle 12 each to be grasped by a user of the power-driven saw. The housing encloses a drive mechanism 14, a mains electrical power supply cable 16 depending from the rear of the housing, an on / off trigger switch 18 protruding from inside the rear handle and an electric motor 20 fixed to the interior of the housing. The blade support is fixed to the housing at a location below the front handle. The saw blades are supported for sliding motion under the blade support. The saw blades are coupled to the drive mechanism.

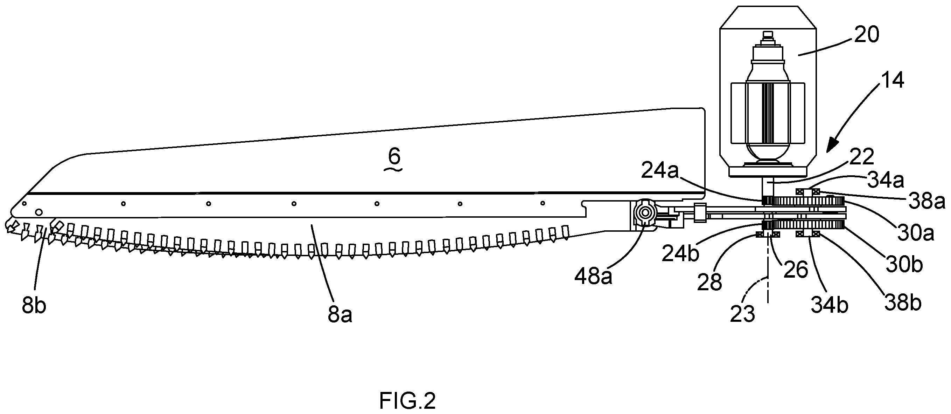

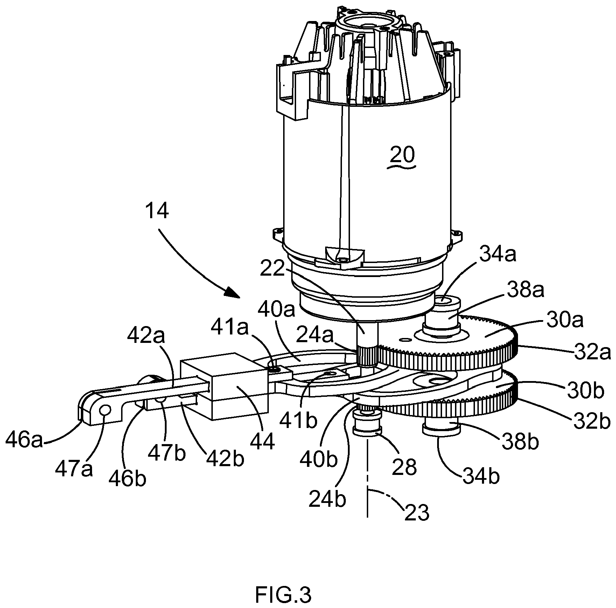

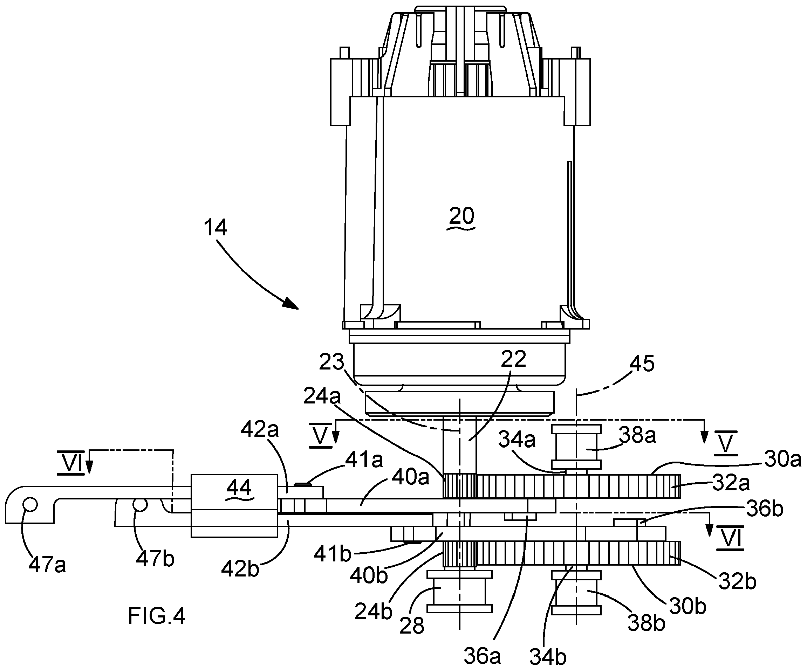

In the present embodiment, the electric motor 20 provides the power-saw 2 with a power means, although such a power tool may alternatively have a combustion engine or an electric motor powered by batteries, the choice of which depends on the environment in which the power tool is designed to be used. Referring to Figures 2 to 4, the electric motor 20 has a drive shaft 22 with a longitudinal central axis 23. The drive shaft has two drive gears: an upper drive gear 24a spaced axially apart from a lower drive gear 24b. A free end 26 of the drive shaft 22 is supported for rotation by a bearing 28 connected to the housing. This is to prevent deflection of the drive shaft 22 when under load.

The drive mechanism 14 comprises a pair of independent driven gears: an upper driven gear 30a spaced axially apart from a lower driven gear 30b. The upper driven gear has a toothed circumference 32a meshing with the upper drive gear 24a. The lower driven gear has a toothed circumference 32b meshing with the lower drive gear 24b.

The upper driven gear 30a rotates about a central upper driven gear axle 34a. The upper driven gear has an upper crank pin 36a disposed eccentricly with regard to the upper driven gear axle 34a. The upper crank pin 36a protrudes from a first non-toothed side of the upper driven gear facing towards the lower driven gear 30b and the upper driven gear axle 34a protrudes from a second opposite non-toothed side of the upper driven gear. The upper driven gear axle 34a is supported for rotation by a bearing 38a connected to the housing 4. A first end of an upper connecting-rod 40a is pivotally coupled to the upper crank pin 36a. A second opposite end of the upper connecting-rod 40a is pivotally coupled to an upper pivot 41a at a first end of an upper drive coupling in the form of an upper shaft 42a which is supported for reciprocating rectilinear motion by a bearing 44 connected to the housing 4. A second opposite end of the upper shaft 42a comprises a left blade clamp, as is described in more detail below.

The lower driven gear 30b rotates about a central lower driven gear axle 34b which is concentric with the upper driven gear axle 34a. The driven gear axles 34a, 34b each form independent parts of a crank axis 45. The lower driven gear has a lower crank pin 36b disposed eccentricly with regard to the lower driven gear axle 34b. The lower crank pin 36b protrudes from a first non-toothed side of the lower driven gear 30b facing towards the upper driven gear 30a and the lower driven gear axle 34b protrudes from a second opposite non-toothed side of the lower driven gear. The lower driven gear axle 34b is supported for rotation by a bearing 38b connected to the housing 4. A first end of a lower connecting-rod 40b is pivotally coupled to the lower crank pin. A second opposite end of the lower connecting-rod 40b is pivotally coupled to a lower pivot 41b at a first end of a drive coupling in the form of a lower shaft 42b which is supported for reciprocating rectilinear motion by the bearing 44. A second opposite end of the lower shaft 42b comprises a right blade clamp, as is described in more detail below.

The left and right blade clamps may be any feature which is capable of releasably fixing one end of the saw blades 8a, 8b to the upper and lower shafts 42a, 42b, respectively, for saw blade renewal. In the present embodiment, the left blade clamp comprises a vertical slit 46a in the second end of the upper shaft 42a. The slit 46a is traversed by a hole 47a which is threaded on one side of the slit to engage a threaded clamp fastener 48a. The clamp fastener passes through an eyelet (not shown) in one end of the left saw blade 8a when located in the slit 46a. Tightening rotation the clamp fastener clamps the left saw blade 8a to the upper shaft 42a. The right blade clamp comprises a slit 46b in the second end of the lower shaft 42b. The slit 46b is traversed by a hole 47b which is threaded on one side of the slit to engage a threaded clamp fastener 48b. The clamp fastener passes through an eyelet (not shown) in one end of the right saw blade 8b when located in the slit 46b. Tightening rotation of the clamp fastener clamps the right saw blade 8b to the lower shaft 42b.

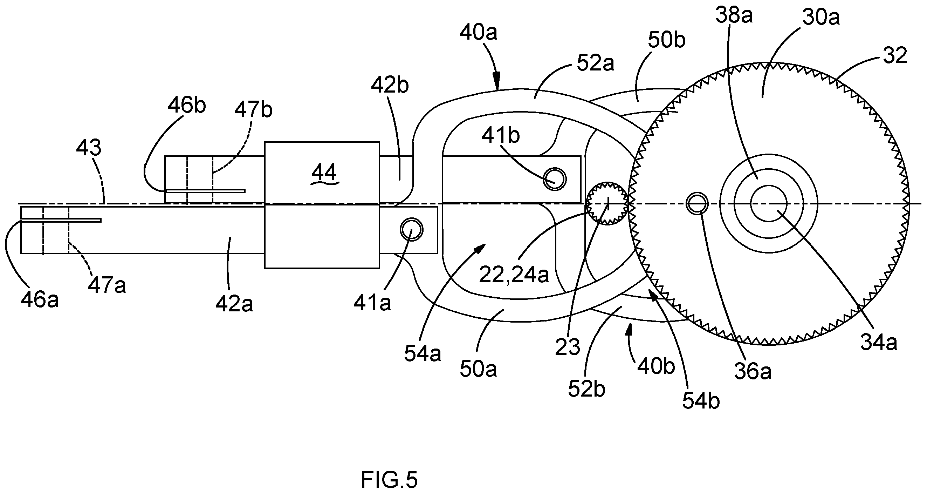

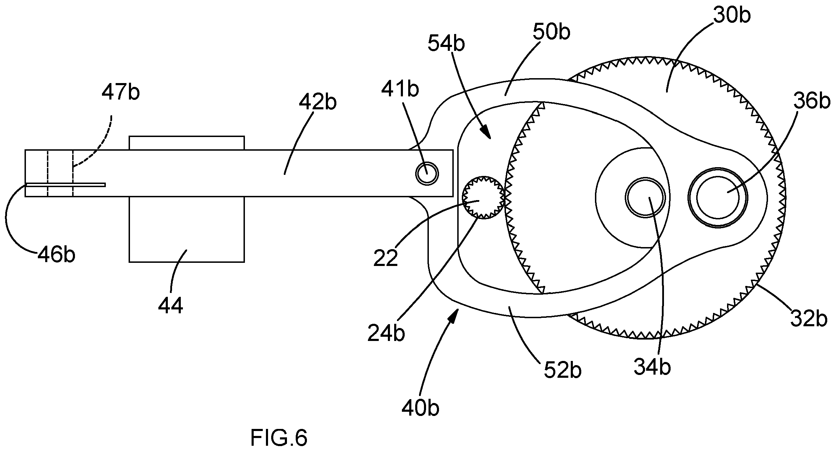

Referring to Figures 5 and 6, the power-driven saw 2 has a longitudinal central plane 43 which is coplanar with the saw blade support 6 and which bisects the housing 4. The drive shaft central axis 23 is located in the central plane 43. The upper connecting-rod 40a comprises a pair of arms 50a, 52a spaced, or bowed, apart to define a central aperture 54a through which passes the drive shaft 22 without touching either of the arms 50a, 52a. The arms have different lengths such that the upper connecting-rod is asymmetrical. When viewed from above the central plane, as shown in Figure 5, the shorter arm 50a is disposed on the same side as the upper shaft 42a when the upper crank pin 36a is located in the central plane 43.

The lower connecting-rod 40b comprises a pair of arms 50b, 52b spaced, or bowed, apart to define a central aperture 54b through which passes the drive shaft 22 without touching either of the arms 50b, 52b. The arms have different lengths such that the lower connecting-rod is asymmetrical. When viewed from above the central plane, as shown in Figure 5, the shorter arm 50b is disposed on the same side as the lower shaft 42b when the lower crank pin 36b is located in the central plane 43.

In use, the trigger switch 18 is depressed and the electric motor 20 energised by electricity fed by the mains electrical power supply cable 16. The motor rotates the drive gears 24a, 24b which rotate the driven gears 30a, 30b in the same direction as each other. Rotation of the driven gears is translated, via the connecting-rods 40a, 40b, into reciprocating rectilinear motion of the shafts 42a, 42b. The upper crank pin 36a is located on the upper driven gear 30a at a location diametrically-opposed to where the lower crank pin 36b is located on the lower driven gear 30b. Movement of the upper connecting-rod 40a and upper shaft 42a are 180 degrees out of phase with the lower connecting-rod 40b and lower shaft 42b and, as a result, the rectilinear motion of the shafts 42a, 42b, and the saw blades 8a, 8b connected thereto, is counter-reciprocating. The driven gears, the crank pins and the connecting-rods operate as a crank assembly. The drive shaft 22 extends through a region between the rotational sweep of the crank pins 36a, 36b and the reciprocating sweep of the shafts 42a, 42b. The arms 50a, 50b, 52a, 52b are shaped to avoid contact with the drive shaft 22 all the while the connecting-rods 40a, 40b are rotating and reciprocating back and forth.

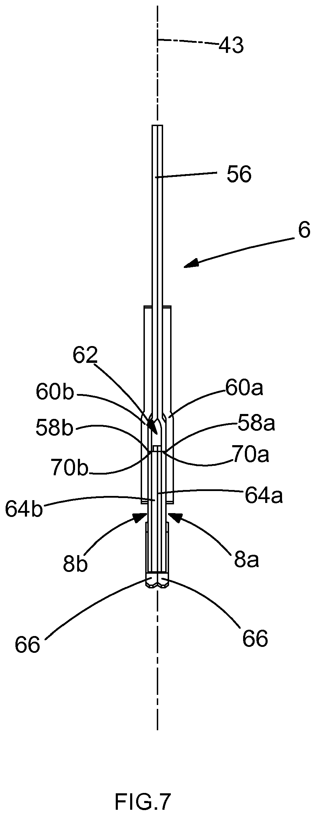

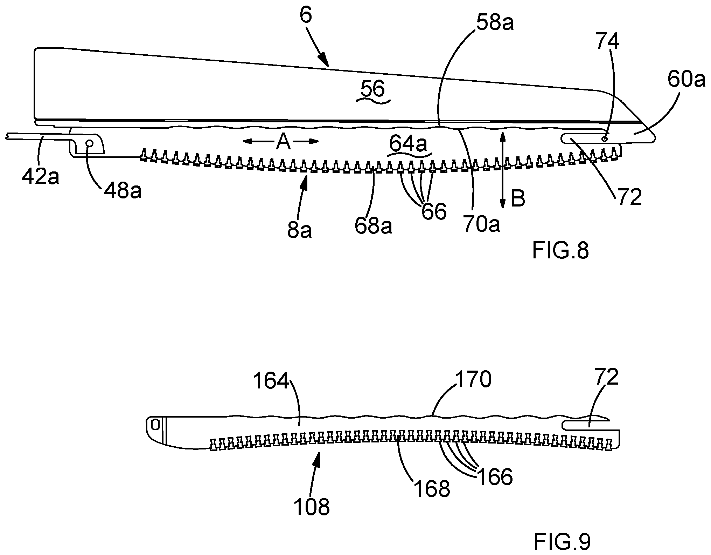

Referring to Figures 7 and 8, the blade support 6 comprises an elongate planar blade support body 56 coplanar with the central plane 43. A lower edge of the blade support body is bifurcated by a pair of shoulders 58a, 58b. The blade support 6 comprises a pair of parallel mutually spaced rims 60a, 60b arranged along the lower edge of the blade support body. As viewed in Figure 7, the left shoulder 58a is clad with the left rim 60a and the right shoulder is 58b is clad with the right rim 60b. The left rim and shoulder, on one side, and the right rim and shoulder, on the other side, define a slot 62 along the lower edge of the blade support body.

Each saw blade 8a, 8b comprises an elongate body 64a, 64b with an array of cutting teeth 66 arranged along a respective convex lower edge 68a, 68b. In use, an upper edge 70a, 70b of each respective saw blade 8a, 8b is located in the slot 62 of the blade support 6. The first end of each saw blade 8a, 8b is coupled to the drive mechanism 14 by a respective blade clamp in the manner already described above. A second opposite end of each saw blade 8a, 8b has a respective mouth 72 facing away from the drive mechanism 14. Each mouth 72 surrounds a lateral pin 74 spanning the slot 62 in the blade support. The lateral pin is orientated perpendicularly to the central plane 43. Each mouth 72 is long enough to accommodate the lateral pin 74 through the full sweep of reciprocating rectilinear motion of the saw blades. As a result, the upper edges 70a, 70b remain in the slot 62 while the saw blades 8a, 8b are coupled to their respective blade clamps.

For the purpose of saw blade 8a, 8b renewal, the upper edges 70a, 70b of the saw blades 8a, 8b may be removed from the slot 62. Using the left saw blade 8a as an example, initially, the left blade clamp is released by loosening rotation of the clamp fastener 48a and removing it from the hole 47a so that the saw blade is free to pivot about the lateral pin 74, out from the slot 46a and away from the blade support 6. Next, the left saw blade 8a is slid towards the drive mechanism 14, the lateral pin leaves the mouth 72 of the left saw blade, and the left saw blade is free. A corresponding process is followed to release the right saw blade 8b.

Referring in particular to Figure 8, and again using the left saw blade 8a as an example, the upper edge 70a of the left saw blade 8a is shaped as a smooth undulating wave, the peaks and troughs of which match the correspondingly shaped left shoulder 58a of the blade support body 56. In use, the upper edge 70a slides against the shoulder 58a. Contact between upper edge and shoulder varies between peak-to-peak contact, and peak-to-trough contact, as the left saw blade performs reciprocating rectilinear motion. The left saw blade and the blade support body are closest at peak-to-trough contact and, conversely, they are furthest apart at peak-to-peak contact. The relative movement between left saw blade and blade support body superimposes a percussive motion upon the left saw blade in a direction approximately perpendicular to the reciprocating rectilinear motion and indicated by a double-headed arrow B. The upper edge 70b of the right saw blade 8b is also shaped as a smooth undulating wave, the peaks and troughs of which match the correspondingly shaped right shoulder 58b of the blade support body 56. Consequently, a percussive motion, also in the direction of double-headed arrow B, is superimposed upon the right saw blade 8b. The percussion motion increases downward cutting force of the saw blades and helps dislodge and clear debris between the cutting teeth 66 thereby improving the cutting speed of the power driven saw 2.

Whilst the upper edges 70a, 70b and shoulders 62a, 62b have the same waveform, the peaks of the left shoulder 58a are adjacent the troughs of the right shoulder 58b, and vice versa. The direction of the percussive force on the left blade 8a is 180 degrees out of phase with the percussive force on the right blade 8b. One blade moves downward while the other is moves upward, and vice versa. The opposing percussion motion of one saw blade in relation to the other saw blade helps balance and cancels-out forces acting in the direction of arrow B and, in doing so, reduces vibration in the power-driven saw 2.

Referring to Figure 9, the power-driven saw may be modified with a different pair of saw blades 108. Each saw blade 108 comprises an elongate body 164 with an array of cutting teeth 166 arranged along a concave lower edge 168. Otherwise, the concave saw blade 108 is the same as the convex saw blades 8a, 8b described above and the same feature numbers are used to identify the same features. The arched lower edges 68, 168 of the convex saw blades 8a, 8b and the concave saw blades 108 introduce a downward component to the reciprocating rectilinear motion at the contact point between the cutting teeth 66, 166 and a work-piece. This increases downward cutting force of the saw blades thereby improving the cutting speed of the power driven saw 2.

## Claims

1. A portable power-driven saw (2) comprising:
a housing (4);
a blade support (6) fixed in relation to the housing;
a power means (20) with a drive shaft (22) rotatable by the power means;
a pair of saw blades (8a, 8b) slideably supported by the blade support for reciprocating rectilinear motion relative thereto wherein each saw blade has a respective drive coupling (42a, 42b) disposed near or at one end of the saw blade; and
a drive mechanism (14) for generating reciprocating rectilinear motion of the saw blades in response to rotation of the drive shaft, wherein the drive mechanism comprises:
a crank assembly (30a, 36a, 30b, 36b) rotatable about a crank axis (45) wherein the crank assembly has a pair of axially-spaced substantially diametrically-opposed crank pins (36a, 36b) rotatable about the crank axis in response to rotation of the drive shaft; and
a pair of connecting-rods (40a, 40b) each connecting a respective crank pin (36a, 36b) to the drive coupling (42a, 42b) of a respective saw blade (8a, 8b) to impart reciprocating motion to each saw blade in response to rotation of the respective crank pin about the crank axis (45),
wherein the drive shaft (22) extends from the power means (20) on one side of the drive mechanism (14), through a region between rotational sweep of the crank pins (36a, 36b) and reciprocating sweep of the drive couplings (42a, 42b) and to a second opposite side of the drive mechanism (14) where a bearing (28) fixed in relation to the power means (20) supports the drive shaft (22) for rotation and wherein the connecting rods (40a, 40b) are shaped to avoid contact with the drive shaft (22) during rotation thereof;
wherein each connecting-rod (40a, 40b) comprises a pair of arms (50a, 50b, 52a, 52b) spaced apart to define a central aperture (54a, 54b) therebetween, wherein each arm extends between a respective crank pin (36a, 36b) at a first end thereof and a respective drive coupling (42a, 42b) at a second end thereof and wherein the drive shaft (22) extends through the central apertures (54a, 54b);
wherein the blade support (6), the crank axis (45) and an axis (23) of the drive shaft (22) are substantially located in a central plane (43) of the power-driven saw (2) with one of the drive couplings (42a, 42b) disposed on each side of the central plane (43), wherein one of the arms (50a, 50b) of each connecting-rod (40a, 40b) is shorter than the other of the arms (52a, 52b) and wherein the shorter arm (50a, 50b) of each connecting-rod (40a, 40b) is disposed on the same side of the central plane (43) as the drive coupling (42a, 42b) connected to said connecting-rod when the crank pins (36a, 36b) are substantially located in the central plane (43);
wherein each drive coupling comprises a shaft (42a, 42b) coupled to a respective connecting-rod (40a, 40b) at a first end thereof and coupled to a respective saw blade (8a, 8b) at a second end thereof; **characterised in that** a first end of each of the connecting-rods (40a, 40b) is pivotally coupled to the respective crank pin (36a, 36b) and **in that** each shaft (42a,42b) is supported for sliding rectilinear motion by a bearing (44) fixed in relation to the housing (4) and wherein the first end of each shaft (42a, 42b) is pivotally coupled to a second end of a respective connecting-rod (40a, 40b).

2. A portable power-driven saw (2) as claimed in claim 1, wherein the drive shaft (22) has at least one drive gear (24a, 24b) rotatable with the drive shaft, wherein the crank assembly comprises a first driven gear (30a) and a second driven gear (30b), wherein each driven gear is independently rotatable about the crank axis (45) on a respective driven gear axle (34a, 34b) supported by a respective bearing (38a, 38b), wherein each driven gear (30a, 30b) has a respective one of the crank pins (36a, 36b) connected to a first non-toothed side of the driven gear and a respective driven gear axle (34a, 34b) connected to a second opposite non-toothed side of the driven gear, wherein the at least one drive gear (24a, 24b) meshes with the first and second driven gears (30a, 30b) to transmit rotation of the drive shaft (22) to the crank pins (36a,36b).

3. A portable power-driven saw (2) as claimed in claim 2, wherein the first non-toothed side of each driven gear (30a, 30b) face each other.

4. A portable power-driven saw (2) as claimed in any of the previous claims, wherein the central plane (43) is substantially equidistant between the outermost edges of the arms (50a, 50b, 52a, 52b) of each connecting-rod (40a, 40b) when the crank pins (36a, 36b) occupy the central plane (43).

5. A portable power-driven saw (2) as claimed in any one of the previous claims, wherein the arms (50a, 50b, 52a, 52b) of the connecting-rods (40a, 40b) are arched in a smooth curve about the drive shaft (22).

6. A portable power-driven saw (2) as claimed in any of the previous claims, wherein the second end of each shaft (42a, 42b) comprises a blade clamp (46a, 47a, 48a, 46b, 47b, 48b) detachably connected to a respective saw blade (8a, 8b).

## Patentansprüche

1. Tragbare motorbetriebene Säge (2), umfassend:
ein Gehäuse (4);
eine Blattstütze (6), die in Bezug auf das Gehäuse befestigt ist;
ein Antriebsmittel (20) mit einer durch das Antriebsmittel drehbaren Antriebswelle (22);
ein Paar Sägeblätter (8a, 8b), die durch die Blattstütze für eine hin- und hergehende geradlinige Bewegung relativ dazu verschiebbar getragen werden, wobei jedes Sägeblatt eine jeweilige Antriebskupplung (42a, 42b) aufweist, die in der Nähe oder an einem Ende des Sägeblattes angeordnet ist; und
einen Antriebsmechanismus (14) zur Erzeugung einer hin- und hergehenden geradlinigen Bewegung der Sägeblätter als Reaktion auf eine Drehung der Antriebswelle, wobei der Antriebsmechanismus umfasst:
eine Kurbelanordnung (30a, 36a, 30b, 36b), die um eine Kurbelachse (45) drehbar ist, wobei die Kurbelanordnung ein Paar axial beabstandeter, im Wesentlichen diametral gegenüberliegender Kurbelzapfen (36a, 36b) aufweist, die als Reaktion auf eine Drehung der Antriebswelle um die Kurbelachse drehbar sind; und
ein Paar Verbindungsstangen (40a, 40b), die jeweils einen jeweiligen Kurbelzapfen (36a, 36b) mit der Antriebskupplung (42a, 42b) eines jeweiligen Sägeblattes (8a, 8b) verbinden, um jedem Sägeblatt eine Hin- und Herbewegung als Reaktion auf eine Drehung des jeweiligen Kurbelzapfens um die Kurbelachse (45) zu verleihen,
wobei sich die Antriebswelle (22) von dem Antriebsmittel (20) auf einer Seite des Antriebsmechanismus (14) durch einen Bereich zwischen einer Drehschwingung der Kurbelzapfen (36a, 36b) und einer hin- und hergehenden Schwingung der Antriebskupplungen (42a, 42b) und zu einer zweiten gegenüberliegenden Seite des Antriebsmechanismus (14) erstreckt, wo ein in Bezug auf das Antriebsmittel (20) befestigtes Lager (28) die Antriebswelle (22) zur Drehung trägt, und wobei die Verbindungsstangen (40a, 40b) geformt sind, um einen Kontakt mit der Antriebswelle (22) während ihrer Drehung zu vermeiden;
wobei jede Verbindungsstange (40a, 40b) ein Paar Arme (50a, 50b, 52a, 52b) umfasst, die voneinander beabstandet sind, um eine zentrale Öffnung (54a, 54b) dazwischen zu definieren, wobei sich jeder Arm zwischen einem jeweiligen Kurbelzapfen (36a, 36b) an einem ersten Ende davon und einer jeweiligen Antriebskupplung (42a, 42b) an einem zweiten Ende davon erstreckt und wobei sich die Antriebswelle (22) durch die zentralen Öffnungen (54a, 54b) erstreckt;
wobei die Blattstütze (6), die Kurbelachse (45) und eine Achse (23) der Antriebswelle (22) im Wesentlichen in einer Mittelebene (43) der motorbetriebenen Säge (2) angeordnet sind, wobei eine der Antriebskupplungen (42a, 42b) auf jeder Seite der Mittelebene (43) angeordnet ist, wobei einer der Arme (50a, 50b) jeder Verbindungsstange (40a, 40b) kürzer als der andere der Arme (52a, 52b) ist und wobei der kürzere Arm (50a, 50b) jeder Verbindungsstange (40a, 40b) auf der gleichen Seite der Mittelebene (43) angeordnet ist wie die mit der Verbindungsstange verbundene Antriebskupplung (42a, 42b), wenn die Kurbelzapfen (36a, 36b) im Wesentlichen in der Mittelebene (43) angeordnet sind;
wobei jede Antriebskupplung eine Welle (42a, 42b) umfasst, die mit einer jeweiligen Verbindungsstange (40a, 40b) an einem ersten Ende davon gekoppelt ist und mit einem jeweiligen Sägeblatt (8a, 8b) an einem zweiten Ende davon gekoppelt ist;
**dadurch gekennzeichnet, dass** ein erstes Ende jeder der Verbindungsstangen (40a, 40b) schwenkbar mit dem jeweiligen Kurbelzapfen (36a, 36b) gekoppelt ist und dass jede Welle (42a, 42b) für eine geradlinige Verschiebungsbewegung durch ein in Bezug auf das Gehäuse (4) befestigtes Lager (44) getragen wird und wobei das erste Ende jeder Welle (42a, 42b) schwenkbar mit einem zweiten Ende einer jeweiligen Verbindungsstange (40a, 40b) gekoppelt ist.

2. Tragbare motorbetriebene Säge (2) nach Anspruch 1, wobei die Antriebswelle (22) mindestens ein Antriebszahnrad (24a, 24b) aufweist, das mit der Antriebswelle drehbar ist, wobei die Kurbelanordnung ein erstes angetriebenes Zahnrad (30a) und ein zweites angetriebenes Zahnrad (30b) umfasst, wobei jedes angetriebene Zahnrad unabhängig um die Kurbelachse (45) auf einer jeweiligen angetriebenen Zahnradachse (34a, 34b) drehbar ist, die durch ein jeweiliges Lager (38a, 38b) getragen wird, wobei jedes angetriebene Zahnrad (30a, 30b) jeweils einen der Kurbelzapfen (36a, 36b) aufweist, der mit einer ersten nicht verzahnten Seite des angetriebenen Zahnrads und einer jeweiligen angetriebenen Zahnradachse (34a, 34) verbunden ist, die mit einer zweiten, gegenüberliegenden, nicht verzahnten Seite des angetriebenen Zahnrads verbunden ist, wobei das mindestens eine Antriebszahnrad (24a, 24b) mit den ersten und zweiten angetriebenen Zahnrädern (30a, 30b) in Eingriff steht, um eine Drehung der Antriebswelle (22) auf die Kurbelzapfen (36a, 36b) zu übertragen.

3. Tragbare motorbetriebene Säge (2) nach Anspruch 2, wobei die erste nicht verzahnte Seite jedes angetriebenen Zahnrads (30a, 30b) einander zugewandt ist.

4. Tragbare motorbetriebene Säge (2) nach einem der vorstehenden Ansprüche, wobei die Mittelebene (43) im Wesentlichen äquidistant zwischen den äußersten Kanten der Arme (50a, 50b, 52a, 52b) jeder Verbindungsstange (40a, 40b) ist, wenn die Kurbelzapfen (36a, 36b) die Mittelebene (43) belegen.

5. Tragbare motorbetriebene Säge (2) nach einem der vorstehenden Ansprüche, wobei die Arme (50a, 50b, 52a, 52b) der Verbindungsstangen (40a, 40b) in einer glatten Kurve um die Antriebswelle (22) gewölbt sind.

6. Tragbare motorbetriebene Säge (2) nach einem der vorstehenden Ansprüche, wobei das zweite Ende jeder Welle (42a, 42b) eine Blattklemme (46a, 47a, 48a, 46b, 47b, 48b) umfasst, die lösbar mit einem jeweiligen Sägeblatt (8a, 8b) verbunden ist.

## Revendications

1. Scie à moteur portative (2) comprenant :
un boîtier (4) ;
un support de lame (6) fixé par rapport au boîtier ;
un moyen d'alimentation (20) doté d'un arbre d'entraînement (22) pouvant être mis en rotation par le moyen d'alimentation ;
une paire de lames de scie (8a, 8b) supportées de manière coulissante par le support de lame pour un mouvement rectiligne alternatif par rapport à celui-ci dans laquelle chaque lame de scie possède un accouplement d'entraînement (42a, 42b) respectif disposé près ou au niveau d'une extrémité de la lame de scie ; et
un mécanisme d'entraînement (14) pour générer un mouvement rectiligne alternatif des lames de scie en réponse à la rotation de l'arbre d'entraînement, dans laquelle le mécanisme d'entraînement comprend :
un ensemble manivelle (30a, 36a, 30b, 36b) pouvant tourner autour d'un axe de manivelle (45) dans laquelle l'ensemble manivelle possède une paire de manetons de manivelle sensiblement diamétralement opposés espacés axialement (36a, 36b) pouvant tourner autour de l'axe de manivelle en réponse à la rotation de l'arbre d'entraînement ; et
une paire de bielles (40a, 40b) reliant chacune un maneton de manivelle (36a, 36b) respectif à l'accouplement d'entraînement (42a, 42b) d'une lame de scie (8a, 8b) respective pour conférer un mouvement alternatif à chaque lame de scie en réponse à la rotation du maneton de manivelle respectif autour de l'axe de manivelle (45),
dans laquelle l'arbre d'entraînement (22) s'étend à partir du moyen d'alimentation (20) d'un côté du mécanisme d'entraînement (14), à travers une région entre un balayage rotatif des manetons de manivelle (36a, 36b) et un balayage alternatif des accouplements d'entraînement (42a, 42b) et jusqu'à un second côté opposé du mécanisme d'entraînement (14) où un palier (28) fixé par rapport au moyen d'alimentation (20) supporte l'arbre d'entraînement (22) pour la rotation et dans laquelle les bielles (40a, 40b) sont façonnées pour éviter le contact avec l'arbre d'entraînement (22) durant la rotation de celui-ci ;
dans laquelle chaque bielle (40a, 40b) comprend une paire de bras (50a, 50b, 52a, 52b) espacés pour définir une ouverture centrale (54a, 54b) entre ceux-ci, dans laquelle chaque bras s'étend entre un maneton de manivelle (36a, 36b) respectif au niveau d'une première extrémité de celui-ci et un accouplement d'entraînement (42a, 42b) respectif au niveau d'une seconde extrémité de celui-ci et dans laquelle l'arbre d'entraînement (22) s'étend à travers les ouvertures centrales (54a, 54b) ;
dans laquelle le support de lame (6), l'axe de manivelle (45) et un axe (23) de l'arbre d'entraînement (22) sont sensiblement situés dans un plan central (43) de la scie à moteur (2) avec l'un des accouplements d'entraînement (42a, 42b) disposés de chaque côté du plan central (43), dans laquelle l'un des bras (50a, 50b) de chaque bielle (40a, 40b) est plus court que l'autre des bras (52a, 52b) et dans laquelle le bras le plus court (50a, 50b) de chaque bielle (40a, 40b) est disposé du même côté du plan central (43) que l'accouplement d'entraînement (42a, 42b) relié à ladite bielle lorsque les manetons de manivelle (36a, 36b) sont sensiblement situés dans le plan central (43) ;
dans laquelle chaque accouplement d'entraînement comprend un arbre (42a, 42b) couplé à une bielle (40a, 40b) respective au niveau d'une première extrémité de celui-ci et couplé à une lame de scie (8a, 8b) respective au niveau d'une seconde extrémité de celui-ci ;
**caractérisée en ce qu'**une première extrémité de chacune des bielles (40a, 40b) est couplée de manière pivotante au maneton de manivelle (36a, 36b) respectif et **en ce que** chaque arbre (42a, 42b) est supporté pour un mouvement rectiligne coulissant par un palier (44) fixé par rapport au boîtier (4) et dans laquelle la première extrémité de chaque arbre (42a, 42b) est couplée de manière pivotante à une seconde extrémité d'une bielle respective (40a, 40b).

2. Scie à moteur portative (2) selon la revendication 1, dans laquelle l'arbre d'entraînement (22) possède au moins un pignon d'entraînement (24a, 24b) pouvant tourner avec l'arbre d'entraînement, dans laquelle l'ensemble manivelle comprend un premier pignon mené (30a) et un second pignon mené (30b), dans laquelle chaque pignon mené peut indépendamment tourner autour de l'axe de manivelle (45) sur un axe de pignon mené (34a, 34b) respectif supporté par un palier (38a, 38b) respectif, dans laquelle chaque pignon mené (30a, 30b) possède un respectif des manetons de manivelle (36a, 36b) relié à un premier côté non denté du pignon mené et un axe de pignon mené (34a, 34b) respectif relié à un second côté non denté opposé du pignon mené, dans laquelle l'au moins un pignon d'entraînement (24a, 24b) s'engrène avec les premier et second pignons menés (30a, 30b) pour transmettre la rotation de l'arbre d'entraînement (22) aux manetons de manivelle (36a, 36b).

3. Scie à moteur portative (2) selon la revendication 2, dans laquelle le premier côté non denté de chaque pignon mené (30a, 30b) fait face à l'autre.

4. Scie à moteur portative (2) selon l'une quelconque des revendications précédentes, dans laquelle le plan central (43) est sensiblement équidistant entre les bords les plus à l'extérieur des bras (50a, 50b, 52a, 52b) de chaque bielle (40a, 40b) lorsque les manetons de manivelle (36a, 36b) occupent le plan central (43).

5. Scie à moteur portative (2) selon l'une quelconque des revendications précédentes, dans laquelle les bras (50a, 50b, 52a, 52b) des bielles (40a, 40b) sont arqués selon une courbe lisse autour de l'arbre d'entraînement (22).

6. Scie à moteur portative (2) selon l'une quelconque des revendications précédentes, dans laquelle la seconde extrémité de chaque arbre (42a, 42b) comprend un serre-lame (46a, 47a, 48a, 46b, 47b, 48b) relié de manière détachable à une lame de scie (8a, 8b) respective.
